# EUROPÄISCHE PATENTSCHRIFT

(11) **EP 1 248 921 B1**
(45) Veröffentlichungstag und Bekanntmachung des Hinweises auf die Patenterteilung: **01.12.2004**
(21) Anmeldenummer: 01971702.4
(22) Anmeldetag: 08.09.2001
(51) Int. Cl.: F16H 47/04, F16H 61/46

(54) **VERFAHREN ZUR SCHALTABLAUFSTEUERUNG EINES KONTINUIERLICHEN AUTOMATIKGETRIEBES, INSBESONDERE EINES KRAFTFAHRZEUGS, MIT GANGSTUFEN-UMSCHALTUNG**
METHOD FOR CONTROLLING THE SHIFTING SEQUENCE OF A CONTINUOUS AUTOMATIC TRANSMISSION, ESPECIALLY A MOTOR VEHICLE, COMPRISING GEAR STEP CHANGEOVERS
PROCEDE DE COMMANDE DE LA SEQUENCE DE CHANGEMENT DE VITESSES D'UNE BOITE DE VITESSES AUTOMATIQUE CONTINUE, NOTAMMENT D'UN VEHICULE AUTOMOBILE, COMPORTANT UN CHANGEMENT DE RAPPORTS

(30) Priorität: 25.10.2000 DE 10052795
(43) Veröffentlichungstag der Anmeldung: 16.10.2002
(73) Patentinhaber: ROBERT BOSCH GMBH, 70442 Stuttgart (DE)
(72) Erfinder: LEHMANN, Ralf, 70569 Stuttgart (DE); MAIENBERG, Uwe, 71229 Leonberg (DE); POLJANSEK, Marko, 72768 Reutlingen (DE)
(86) Internationale Anmeldenummer: PCT/DE2001/003453
(87) Internationale Veröffentlichungsnummer: WO 2002/035120

(56) Entgegenhaltungen:
- WO-A-00/43695
- GB-A- 2 177 765

## Beschreibung

Die Erfindung betrifft ein Verfahren zur Schaltablaufsteuerung eines kontinuierlichen Automatikgetriebes, insbesondere eines Kraftfahrzeugs, mit Gangstufen-Umschaltung, wobei das Übersetzungsverhältnis des Automatikgetriebes innerhalb einer eingestellten Gangstufe mittels einer Verstelleinheit kontinuierlich verstellbar ist, gemäß Oberbegriff des Anspruchs 1.

Ein solches Verfahren ist aus WO-A-00/43695 bekannt.

### Stand der Technik

Kontinuierliche Automatikgetriebe mit Gangstufen-Umschaltung sind bereits unter der Bezeichnung "CVT-Getriebe" bekannt. Es handelt sich hierbei um Kombinationsgetriebe für Kraftfahrzeuge, welche einen Stufenautomaten (Planetensätze) und eine kontinuierliche Verstelleinrichtung zur stufenlosen Übersetzungsverstellung innerhalb einer jeweils eingestellten Gangstufe (Bereich) enthalten.

Nachteilhafterweise sind die bekannten Verfahren zur Schaltablaufsteuerung nicht geeignet, eine zufriedenstellende Verstellung eines Übersetzungsverhältnisses an einem derartigen Kombinationsgetriebe (CVT-Getriebe mit Bereichsumschaltung) zu gewährleisten.

### Vorteile der Erfindung

Das erfindungsgemäße Verfahren ist dadurch gekennzeichnet, dass eine koordinierte, datenabhängige Steuerung der Gangstufen-Umschaltung und der kontinuierlichen Übersetzungsverhältnisverstellung mittels eines gemeinsamen Schaltablaufsteuersystems erfolgt. Dadurch, dass sowohl die Steuerung der Gangstufen-Umschaltung als auch der kontinuierlichen Übersetzungsverhältnisverstellung innerhalb einer eingestellten Gangstufe (Bereich) koordiniert mittels eines gemeinsamen Schaltablaufsteuersystems erfolgt, ist es möglich, Verstellaktionen eines Übersetzungsverhältnisses an einem kontinuierlichen Automatikgetriebe flexibel mittels geeigneter Datenänderungen zu erzielen. Eine derartige koordinierte, datenabhängige Steuerung erlaubt somit eine korrekte und hinsichtlich eines. Fahrzeugbetriebs zufriedenstellende Verstellung beziehungsweise Einstellung eines Übersetzungsverhältnisses an einem entsprechenden kontinuierlichen Automatikgetriebe. Dabei lässt sich in verhältnismäßig einfacher Weise unter Heranziehung eines geeigneten Steuerungsprogramms (Software) eine entsprechende Steuerung mittels eines übergeordneten Schaltablaufsteuersystems realisieren.

Mit Vorteil erfolgt eine Initialisierung der insbesondere als hydrostatische Einheit ausgebildeten Verstelleinheit. Hierbei handelt es sich somit um ein hydraulisches CVT-Getriebe. Mittels einer Initialisierung der Verstelleinheit ist es möglich, im Rahmen einer Nullpunkt-Anpassung gegebenenfalls vorliegende Toleranzen und/oder Lagediskrepanzen von mit der Verstelleinheit in Wirkverbindung stehenden Bauelementen auszugleichen. Dies gewährleistet eine präzise kontinuierliche Verstellung eines Übersetzungsverhältnisses an einem CVT-Getriebe mittels der Verstelleinheit.

Vorteilhafterweise erfolgt die Initialisierung in Form einer jeweiligen Nullpunkt-Anpassung der Verstelleinheit in Bezug auf eine Vorwärtsfahrt und/oder auf eine Rückwärtsfahrt des Kraftfahrzeugs. Die Verstelleinheit hat eine Betriebsposition, ab der eine Rückwärtsfahrt des Kraftfahrzeugs möglich ist, obwohl die Planetensätze für eine Vorwärtsfahrt konfiguriert sind. Dabei ist zwischen zwei voneinander verschiedenen, spezifischen Betriebspositionen der Verstelleinheit zu unterscheiden, nämlich einer ersten Betriebsposition, ab welcher eine Rückwärtsfahrt des Kraftfahrzeugs möglich, aber nicht gewünscht ist, und einer zweiten Betriebsposition, ab welcher eine Vorwärtsfahrt des Kraftfahrzeugs möglich und gewünscht ist. Diese zwei Betriebspositionen der Verstelleinheit können sich aufgrund von Alterungserscheinungen der Verstelleinheit und/oder von mit selbiger in Wirkverbindung stehenden Bauelementen verschieben. Hierdurch sich einstellende, nicht erwünschte und auf die jeweilige Positionierung der Verstelleinheit zurückgehende Ungenauigkeiten werden mittels der jeweiligen Nullpunkt-Anpassung der Verstelleinheit hinsichtlich einer Vorwärts- und Rückwärtsfahrt des Kraftfahrzeugs in zuverlässiger Weise kompensiert.

Gemäß einer bevorzugten Ausführungsvariante erfolgt die Initialisierung vor einer jeweiligen Inbetriebnahme des Kraftfahrzeugs. Aufgrund der begrenzt zur Verfügung stehenden Zeitspanne zur Durchführung einer korrekten Initialisierung wird eine verhältnismäßig schnell und präzise agierende Steuerung benötigt, welche mittels Einsatz eines übergeordneten Schaltablaufsteuersystems zur koordinierten und datenabhängigen Steuerung der Gangstufen-Umschaltung und der kontinuierlichen Übersetzungsverhältnisverstellung gewährleistet werden kann.

Mit Vorteil wird die Verstelleinheit mittels eines mit dem Schaltablaufsteuersystem wirkverbundenen Schrittmotors zur kontinuierlichen Übersetzungsverhältnisverstellung eingestellt. Ein Schrittmotor ist in verhältnismäßig einfacher Weise steuerbar und eignet sich besonders zum Verstellen der für die kontinuierlich veränderbare Übersetzung vorgesehenen und insbesondere als hydrostatische Einheit ausgebildeten Verstelleinheit. Dabei können gegebenenfalls auftretende Diskrepanzen zwischen einer jeweiligen Schrittmotorposition und einer entsprechenden Betriebsposition der Verstelleinheit (hydrostatische Einheit) mittels der vorerwähnten Initialisierung der Verstelleinheit kompensiert werden. Ebenfalls können in derselben Weise Diskrepanzen zwischen Soll- und Istposition des Schrittmotors, beispielsweise aufgrund von Elektroniktoleranzen, Schwankungen in einem hydraulischen Drucksystem oder ähnlichem, ausgeglichen werden. Da die Ansteuerung des Schrittmotors insbesondere während einer Gangstufen-Umschaltung in eine Phasensteuerung der Schaltablaufsteuerung integriert ist, ist es möglich, in jeder Schaltungsphase eine Schrittmotor-Aktion auszulösen.
Vorteilhafterweise stellt das Schaltablaufsteuersystem vor Freigabe einer Gangstufen-Umschaltung die Einnahme einer definierten Schaltposition der Verstelleinheit fest. In dieser Weise wird sichergestellt, dass sich die Verstelleinheit bei einer Gangstufen-Umschaltung (Bereichswechsel) in einer definierten Schaltposition befindet, in welcher Synchronität zur Einstellung von durch entsprechende Planetensätze repräsentierten Gängen im Automa-. tikgetriebe vorliegt.

Gemäß einer bevorzugten Ausführungsvariante erfolgt im Rahmen der kontinuierlichen Übersetzungsverhältnisverstellung eine Positionsregelung der Verstelleinheit. Mittels einer derartigen Positionsregelung ist es vorteilhafterweise möglich, gegebenenfalls vorliegende Diskrepanzen zwischen einem jeweiligen Vorgabewert für eine einzustellende Schrittmotorposition und einer entsprechenden Position der Verstelleinheit (hydrostatische Einheit) zu kompensieren. Dabei kann zum Ausgleich von nicht erwünschten Übersetzungsabweichungen ein Modell aus Kennwerten beziehungsweise Kennfeldern oder aus mechanischen beziehungsweise hydraulischen Grundlageninformationen im Rahmen einer Positionsregelung herangezogen werden.

Vorzugsweise werden zur Positionsregelung folgende Verstellparameter herangezogen:
- Korrekturschrittanzahl pro Rechenschritt;
- Ausgabefrequenz der Korrekturschritte in einem definierten Zeitraum.

In dieser Weise kann das Übersetzungsverhältnis mittels der Positionsregelung betriebsgünstig beeinflusst werden.

Weitere vorteilhafte Ausgestaltungen der Erfindung ergeben sich aus der Beschreibung.

### Zeichnungen

Die Erfindung wird nachfolgend in einem Ausführungsbeispiel anhand zugehöriger Zeichnungen näher erläutert. Es zeigen:
- Figur 1: ein Ablaufdiagramm einer Initialisierung einer Verstelleinheit eines kontinuierlichen Automatikgetriebes und
- Figur 2: ein Ablaufdiagramm zur Einstellung beziehungsweise Vorgabe des Übersetzungsverhältnisses innerhalb einer Gangstufe.

### Beschreibung der Erfindung

Das Verfahren dient zur Schaltablaufsteuerung eines hydraulischen Automatikgetriebes, insbesondere eines Kraftfahrzeugs, mit Gangstufen-Umschaltung, wobei das Übersetzungsverhältnis des Automatikgetriebes innerhalb einer eingestellten Gangstufe (Bereich) mittels einer Verstelleinheit kontinuierlich verstellbar ist. Hierbei ist vorgesehen, dass eine koordinierte, datenabhängige Steuerung der Gangstufen-Umschaltung und der kontinuierlichen Übersetzungsverhältnisverstellung mittels eines gemeinsamen Schaltablaufsteuersystems erfolgt. Dabei erfüllt das Schaltablaufsteuersystem die folgenden drei Hauptaufgaben:
- Initialisierung der Verstelleinheit;
- Einstellung eines Übersetzungsverhältnisses innerhalb einer Gangstufe (Bereich) ;
- Sicherstellung einer korrekten Einnahme einer definierten Schaltposition der Verstelleinheit bei einer Gangstufen-Umschaltung (Bereichswechsel. beziehungsweise Schaltung).

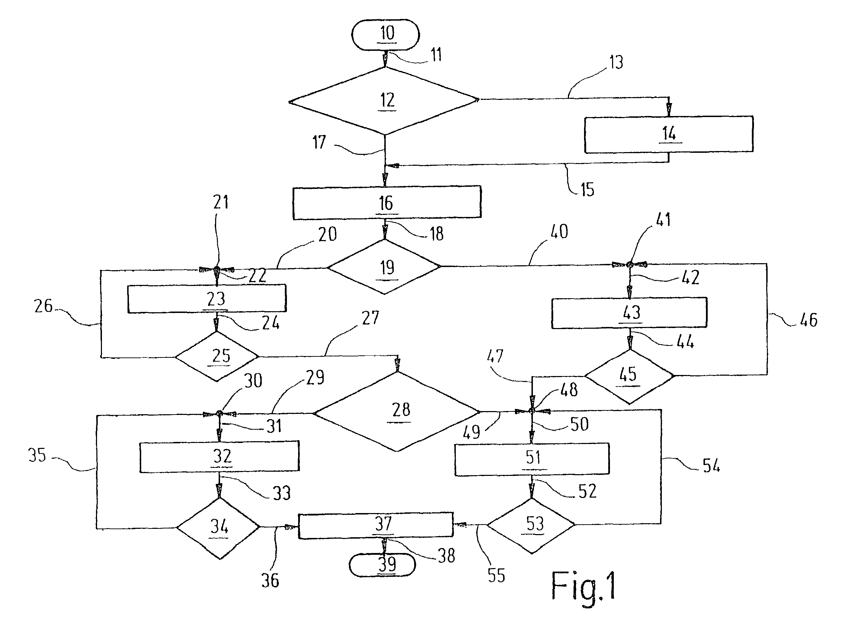

Figur 1 zeigt ein mögliches Ausführungsbeispiel einer Initialisierung der Verstelleinheit in Form eines Ablaufdiagramms. Ein mit 10 bezeichneter Ablaufanfang (Start) ist mittels einer Flusslinie 11 mit einer Verzweigung 12 verbunden, mittels welcher im Rahmen einer Applikationseinstellungsvariante die Frage gestellt wird, ob auf eine absolute Position der Verstelleinheit Bezug genommen werden soll. Dabei kann die Verstelleinheit als hydrostatische Einheit ausgebildet sein, welche mit einem steuerbaren Schrittmotor wirkverbunden ist zur kontinuierlichen Übersetzungsverhältnisverstellung des Automatikgetriebes. Für den Fall, dass kein Bezug auf eine absolute Position der Verstelleinheit genommen werden soll, führt eine Flusslinie 17 von der Verzweigung 12 zu einer Operationseinheit 16, mittels welcher eine Änderung des Schrittmotors um X-Schritte eingeleitet wird. Falls auf eine absolute Position der Verstelleinheit Bezug genommen werden soll, führt eine Flusslinie 13 von der Verzweigung 12 zu einer Operationseinheit 14, welche ein Anfahren des Schrittmotors an einen Anschlag, beispielsweise an einen unteren Anschlag, auslöst. Nach abgeschlossener Positionierung des Schrittmotors führt eine Flusslinie 15 von der Operationseinheit 14 zurück zur Flusslinie 17 und schließlich zur Operationseinheit 16, welche mittels einer Flusslinie 18 mit einer Verzweigung 19 verbunden ist. Die Verzweigung 19 erlaubt eine Abfrage hinsichtlich einer Verstellung der hydrostatischen. Einheit (Verstelleinheit), das heißt, ob die Verstellung zu einer vergrößernden Geschwindigkeit der hydrostatischen Einheit (Flusslinie 40) oder zu einer verkleinernden beziehungsweise zu keiner Veränderung der Geschwindigkeit der hydrostatischen Einheit (Flusslinie 20) führt. Die Geschwindigkeit der hydrostatischen Einheit wird z.B. mittels eines Sensors oder durch Berechnung aus anderen gemessenen Geschwindigkeiten ermittelt.

Im Falle einer verkleinernden beziehungsweise nicht erfolgenden Veränderung der Geschwindigkeit der hydrostatischen Einheit führt eine mittels einer Übergangsstelle 21 mit der Flusslinie 20 verbundene Flusslinie 22 zu einer Operationseinheit 23, welche eine Änderung des Schrittmotors um X-Schritte einleitet. Eine Flusslinie 24 führt von der Operationseinheit 23 zu einer Verzweigung 25, mittels welcher abgefragt wird, ob ein definierter Punkt P1 (Betriebsposition der Verstelleinheit, ab welcher eine Rückwärtsfahrt des Kraftfahrzeugs möglich ist) oder ein definierter Punkt P2 (Betriebsposition der Verstelleinheit, ab welcher eine Vorwärtsfahrt des Kraftfahrzeugs möglich ist) erreicht ist. Sollte dies nicht zutreffen, führt eine Flusslinie 26 von der Verzweigung 25 zurück zur Übergangsstelle 21. Bei Erreichen des Punktes P1 oder P2 durch die hydrostatische Einheit führt dagegen eine Flusslinie 27 von der Verzweigung 25 zu einer Verzweigung 28, mittels welcher abgefragt wird, ob während der Suche nach dem Punkt P1 oder P2 die Geschwindigkeit der hydrostatischen Einheit (Verstelleinheit) konstant geblieben ist oder ob eine Änderung dieser Geschwindigkeit erfolgte. Im Falle einer Geschwindigkeitsänderung der hydrostatischen Einheit führt eine Flusslinie 29 von der Verzweigung 28 zu einer Übergangsstelle 30, von welcher eine Flusslinie 31 zu einer Operationseinheit 32 führt, welche eine Änderung des Schrittmotors um X-Schritte einleitet. Für den Fall, dass keine Änderung der Geschwindigkeit der hydrostatischen Einheit erfolgt ist, führt eine Flusslinie 49 zu einer Übergangsstelle 48, welche später näher erläutert wird. Von der Operationseinheit 32 führt eine Flusslinie 33 zu einer Verzweigung 34, mittels welcher eine Abfrage erfolgt, ob der Schrittmotor den noch nicht ermittelten Punkt P1 oder P2 erreicht hat. Ist der gesuchte Punkt nicht erreicht worden, führt eine Flusslinie 35 zurück zur Verzweigung 30. Wenn der gesuchte Punkt P1 oder P2 erreicht worden ist, führt eine Flusslinie 36 zu einer Operationseinheit 37, mittels welcher eine Positionierung des Schrittmotors auf den Punkt P2 eingeleitet wird. Eine von der Operationseinheit 37 ausgehende Flusslinie 38 führt zum Ablaufende 39 des Ablaufdiagramms.

Für den Fall, dass gemäß der Verzweigung 19 eine vergrößernde Geschwindigkeit der hydrostatischen Einheit (Verstelleinheit) ermittelt wurde, führt die Flusslinie 40 zu einer Übergangsstelle 41, von welcher eine Flusslinie 42 zu einer Operationseinheit 43 führt, welche eine Änderung des Schrittmotors um X-Schritte einleitet, d.h. die Verstellrichtung der hydrostatischen Einheit wird umgedreht (Verstellrichtungsumkehr). Die Operationseinheit 43 ist mittels einer Flusslinie 44 mit einer Verzweigung 45 verbunden, mittels welcher abgefragt wird, ob die hydrostatische Einheit den Punkt P1 oder P2 erreicht hat. Für den Fall, dass keiner dieser Punkte eingestellt worden ist, führt eine Flusslinie 46 zurück zur Übergangsstelle 41. Wenn dagegen die hydrostatische Einheit einen dieser Punkte eingenommen hat, führt eine Flusslinie 47 zur Übergangsstelle 48, zu welcher gleichzeitig auch die von der Verzweigung 28 kommende Flusslinie 49 führt. Die Übergangsstelle 48 ist mittels einer Flusslinie 50 mit einer Opera-tionseinheit 51 verbunden, mittels welcher eine Änderung des Schrittmotors um-X-Schritte eingeleitet wird, d.h. wird die Operationseinheit über die Flußlinien 47 und 50 erreicht, wird die Verstellrichtung der hydrostatischen Einheit beibehalten. Wird die Operationseinheit 51 jedoch über die Flußlinien 49,50 erreicht, so erfolgt nun eine Umkehr der Verstellrichtung der hydrostatischen Einheit. Die Operationseinheit 51 ist mittels einer Flusslinie 52 mit einer Verzweigung 53 verbunden, welche eine Abfrage erlaubt, ob der Schrittmotor den Punkt P1 oder P2 erreicht hat. Wenn der gesuchte Punkt nicht erreicht worden ist, führt eine Flusslinie 54 von der Verzweigung 53 zurück zur Übergangsstelle 48. Falls der gesuchte Punkt eingestellt worden ist, führt eine Flusslinie 55 von der Verzweigung 53 zur Operationseinheit 37, welche, wie bereits oben erwähnt, eine Positionierung des Schrittmotors auf P2 einleitet und mittels der Flusslinie 38 mit dem Ablaufende 39 des Ablaufdiagramms verbunden ist.

Für den Fall, dass auf eine absolute Position der Verstelleinheit (hydrostatische Einheit) Bezug genommen werden soll, wird folgender Ablaufstrang des Ablaufdiagramms durchlaufen: Ablaufanfang 10, Flusslinie 11, Verzweigung 12, Flusslinie 13, Operationseinheit 14, Flusslinie 15, Flusslinie 17, Operationseinheit 16, Flusslinie 18, Verzweigung 19, Flusslinie 20, Übergangsstelle 21, Flusslinie 22, Operationseinheit 23, Flusslinie 24, Verzweigung 25, Flusslinie 26 beziehungsweise Flusslinie 27, Verzweigung 28, Flusslinie 29, Übergangsstelle 30, Flusslinie 31, Operationseinheit 32, Flusslinie 33, Verzweigung 34, Flusslinie 35 beziehungsweise Flusslinie 36, Operationseinheit 37, Flusslinie 38, Ablaufende 39.

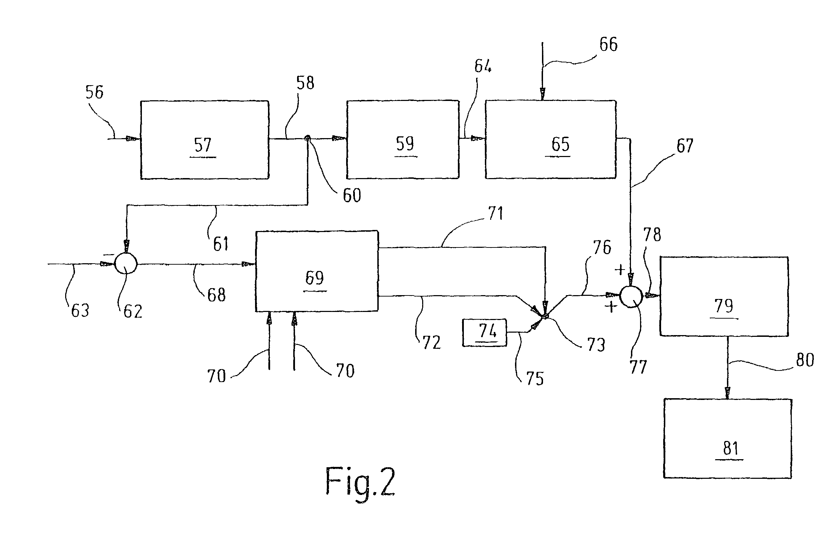

Figur 2 zeigt ein Ablaufdiagramm zur kontinuierlichen Einstellung eines Übersetzungsverhältnisses innerhalb einer Gangstufe (Bereich) des Automatikgetriebes. Mittels einer Flusslinie 56 wird ein Übersetzungsvorschlag an eine Operationseinheit 57 übermittelt, welche eine Überprüfung des genannten Vorschlags auf dessen Realisierbarkeit durchführt. Von der Operationseinheit 57 führt eine Flusslinie 58 zu einer Operationseinheit 59, mittels welcher eine Umwandlung der Eingangsdaten in eine absolute Schrittposition des Schrittmotors erfolgt. Von einer an der Flusslinie 58 vorgesehenen Übergangsstelle 60 führt eine Flusslinie 61 zu einer weiteren Übergangsstelle 62, welche später näher beschrieben wird. Die Operationseinheit 59 ist mittels einer Flusslinie 64 mit einer Operationseinheit 65 verbunden, die zur Ermittlung einer Schrittdifferenz zu einer alten geschätzten Schrittposition des Schrittmotors dient. Hierzu werden Informationen hinsichtlich einer alten geschätzten Schrittposition des Schrittmotors mittels einer Flusslinie 66 an die Operationseinheit 65 gegeben. Die Operationseinheit 65 ist mittels einer Flusslinie 67 mit einer Übergangsstelle 77 additiv verbunden, von welcher eine Flusslinie 78 zu einer Operationseinheit 79 führt, die zur Begrenzung der Einstellung des Schrittmotors auf eine maximale Schrittzahl pro Rechenzyklus dient. Von der Operationseinheit 79 führt eine Flusslinie 80 zu einer Operationseinheit 81, welche einen Ausgabewert zur Einstellung des Schrittmotors liefert.

Eine weitere Eingangsgröße "Istwert der Übersetzung" wird mittels einer Flusslinie 63 der oben erwähnten Übergangsstelle 62 subtraktiv übermittelt, von welcher eine Flusslinie 68 zu einer Operationseinheit 69 führt, welche zu einem modellhaften Ausgleich einer gegebenenfalls vorliegenden Übersetzungsabweichung dient. Zur Operationseinheit 69 führen eine Mehrzahl an Flusslinien 70, mittels welchen Daten, beispielsweise in Bezug auf die jeweils vorliegende Abtriebsdrehzahl, Öltemperatur oder ähnliches, an die Operationseinheit 69 gegeben werden. Von der Operationseinheit 69 führt eine Flusslinie 71 mit der Information "Ausgabefrequenz der Korrekturschritte in einem definierten Zeitraum" und eine Flusslinie 72 mit der Information "Korrekturschrittanzahl pro Rechenschritt" zu einem Schalter 73. Der Schalter 73 wird nun mit der Ausgabefrequenz der Korrekturschritte getaktet. Dies bedeutet, dass abwechselnd der Wert "Korrekturschrittanzahl pro Rechenschritt" und ein Wert einer Funktionseinheit 74, welche über die Flusslinie 75 mit dem Schalter 73 verbunden ist, über die Flusslinie 76 zur Übergangsstelle 77 unter Ausbildung einer additiven Verknüpfung zugeführt wird. Anschließend erfolgt, wie bereits oben erwähnt, mittels der Operationseinheit 79 eine Begrenzung auf maximale Schritte pro Rechenzyklus sowie die Ausgabe eines entsprechenden Verstellwerts für den Schrittmotor mittels der Operationseinheit 81.

Die Operationseinheiten 57, 59 und 65 des Ablaufdiagramms gemäß Figur 2 bilden zusammen mit den entsprechenden Flusslinien eine Vorsteuerung, während die Operationseinheit 69 Teil einer Positionsregelung ist. Dabei dient die Positionsregelung zum Ausgleich von gegebenenfalls vorliegenden Diskrepanzen zwischen einem Vorgabewert für eine Schrittmotorposition, einerseits, und einer Betriebsposition der hydrostatischen Einheit (Verstelleinheit), andererseits.

Vorteilhafterweise kann in jeder Schaltungsstellung des Automatikgetriebes des Automatikgetriebes mittels eines Schaltablaufsteuersystems eine Schrittmotoraktion zur kontinuierlichen Übersetzungsverhältnisverstellung desselben ausgelöst werden.

## Patentansprüche

1. Verfahren zur Schaltablaufsteuerung eines kontinuierlichen Automatikgetriebes eines Kraftfahrzeuges mit Gangstufen-Umschaltung, wobei das Übersetzungsverhältnis des Automatikgetriebes innerhalb einer eingestellten Gangstufe mittels einer hydrostatischen Verstelleinheit kontinuierlich verstellbar ist und eine koordinierte, datenabhängige Steuerung der Gangstufen-Umschaltung und der kontinuierlichen Übersetzungsverhältnisverstellung mittels eines gemeinsamen Schaltablaufsteuersystems erfolgt, **dadurch gekennzeichnet, dass** Mittel zur Erfassung der Geschwindigkeit der hydrostatischen Einheit vorgesehen sind und die hydrostatische Verstelleinheit mittels eines mit dem Schaltablaufsteuersystem wirkverbundenen Schrittmotor eingestellt wird, wobei vor Inbetriebnahme des Fahrzeuges eine Initialisierung der hydrostatischen Verstelleinheit dadurch erfolgt, dass der Schrittmotors verstellt wird und aus den in Abhängigkeit von der Schrittmotorposition erfassten Werten für die Geschwindigkeit der hydrostatischen Einheit eine spezifische Betriebsposition (P2) ermittelt wird, ab welcher eine Vorwärtsfahrt des Kraftfahrzeuges möglich ist, und der Schrittmotor am Ende der Initialisierung so eingestellt wird, dass sich die Verstelleinheit in der so aufgefundenen Betriebsposition (P2) befindet, wodurch eine unerwünschte Rückwärtsfahrt des Fahrzeuges nach dessen Inbetriebnahme vermieden wird.

2. Verfahren nach Anspruch 1, **dadurch gekennzeichnet, dass** das Schaltablaufsteuersystem vor Freigabe einer Gangstufen-Umschaltung die Einnahme einer definierten Schaltposition der Verstelleinheit feststellt.

3. Verfahren nach Anspruch 1, **dadurch gekennzeichnet, dass** im Rahmen der kontinuierlichen Übersetzungsverhältnisverstellung eine Positionsregelung der Verstelleinheit erfolgt.

4. Verfahren nach einem der Ansprüche 1 bis 3, **dadurch gekennzeichnet, dass** zur Positionsregelung folgende Verstellparameter herangezogen werden:
- Korrekturschrittanzahl pro Rechenschritt
- Ausgabefrequenz der Korrekturschritte in einem definierten Zeitraum.

## Claims

1. Method for controlling the gear shifting sequence of a continuous automatic transmission of a motor vehicle with gear speed changeover, the transmission ratio of the automatic transmission being continuously adjustable within a set gear speed by means of a hydrostatic adjustment unit and a coordinated data-dependent control of the gear speed changeover and of the continuous transmission ratio adjustment being carried out by means of a common gear shifting sequence control system, **characterized in that** means are provided for sensing the speed of the hydrostatic unit, and the hydrostatic adjustment unit is set by means of a stepping motor which is operatively connected to the gear shifting sequence control system, the hydrostatic adjustment unit being initialized, before the motor vehicle is activated, **in that** the stepping motor is adjusted and a specific operating position (P2) starting from which forward travel of the motor vehicle is possible is determined from the values of the speed of the hydrostatic unit which are sensed as a function of the position of the stepping motor, and the stepping motor is set at the end of the initialization in such a way that the adjustment unit is in the operating position (P2) which has been found in this way, as a result of which undesired reversing of the vehicle after it has been activated is avoided.

2. Method according to Claim 1, **characterized in that** the gear shifting sequence control system sets a defined shifting position of the adjustment unit before a gear speed changeover is enabled.

3. Method according to Claim 1, **characterized in that** position control of the adjustment unit takes place within the scope of the continuous adjustment of the transmission ratio.

4. Method according to one of Claims 1 to 3, **characterized in that** the following adjustment parameters are used for the position control:
- number of correction steps per calculating step
- output frequency of the correction steps in a defined time period.

## Revendications

1. Procédé de commande de la séquence de changement de vitesses d'une boîte de vitesses automatique continue d'un véhicule automobile, comportant un changement de rapports, selon lequel
le rapport de démultiplication de la boîte automatique est réglable en continu dans un rapport de vitesses fixé, à l'aide d'une unité de réglage hydrostatique, la commande coordonnée dépendant des données de la commutation des rapports de vitesses et le réglage continu du rapport de démultiplication se faisant à l'aide d'un système commun de commande de séquence de changement de vitesses,
**caractérisé en ce que**
des moyens saisissent la vitesse de l'unité hydrostatique et l'unité de réglage hydrostatique est réglée à l'aide d'un moteur pas à pas coopérant avec le système de commande de la séquence de changement de vitesses,
avant la mise en route du véhicule on initialise l'unité de réglage hydrostatique pour régler le moteur pas à pas et à partir des valeurs saisies en fonction de la position du moteur pas à pas de la vitesse de l'unité hydrostatique on détermine une position de fonctionnement spécifique (P2) à partir de laquelle le véhicule peut avancer, et on règle le moteur pas à pas à la fin de l'initialisation pour que l'unité de réglage se trouve dans la position de fonctionnement (P2) ainsi trouvée de manière à éviter une marche arrière accidentelle du véhicule après sa mise en route.

2. Procédé selon la revendication 1,
**caractérisé en ce que**
le système de commande de la séquence de changement de vitesses fixe la prise d'une position de changement de vitesses, définie de l'unité de réglage avant de libérer le changement des rapports de vitesses.

3. Procédé selon la revendication 1,
**caractérisé par**
une régulation de position de l'unité de réglage dans le cadre du réglage continu du rapport de démultiplication.

4. Procédé selon l'une des revendications 1 à 3,
**caractérisé en ce qu'**
on utilise les paramètres de réglage suivants pour la régulation de position :
- nombre de pas de correction par pas de calcul,
- fréquence d'émission des pas de correction dans un intervalle de temps défini.
